# FASCICULE DE BREVET EUROPEEN

(11) **EP 0 897 409 B1**
(45) Date de publication et mention de la délivrance du brevet: **26.06.2002**
(21) Numéro de dépôt: 97921910.2
(22) Date de dépôt: 30.04.1997
(51) Int. Cl.: C08J 3/12, C08L 33/02

(54) **PROCEDE POUR LA PREPARATION DE POUDRES SUPERABSORBANTES A FORTE ABSORPTION ET FORTE SUCCION CAPILLAIRE**
VERFAHREN ZUR HERSTELLUNG SUPERABSORBIERENDER PULVER MIT HOHER ABSORPTION UND MIT HOHER KAPILLARER SAUGLEISTUNG
PROCESS FOR THE PREPARATION OF SUPERABSORTIVE POWDERS WITH HIGH ABSORPTION AND HIGH CAPILLARY INTAKE

(30) Priorité: 09.05.1996 FR 9605795
(43) Date de publication de la demande: 24.02.1999
(73) Titulaire: Atofina, 92800 Puteaux (FR)
(72) Inventeur: COLLETTE, Christian, F-75005 Paris (FR); HIDALGO, Manuel, F-92270 Bois-Colombes (FR); KOWALIK, André, F-60270 Gouvieux (FR); LEBENDENKO, Fabienne, F-60290 Cauffry (FR); PUCHOIS, Emmanuel, F-75019 Paris (FR)
(86) Numéro de dépôt international: FR9700769
(87) Numéro de publication internationale: WO9743331

(56) Documents cités:
- EP-A- 0 258 120
- EP-A- 0 441 507
- EP-A- 0 644 211

## Description

La présente invention a trait au domaine des poudres superabsorbantes pour l'absorption des fluides aqueux, appréciées en particulier pour la réalisation d'articles d'hygiène destinés à retenir les fluides corporels.

Ces poudres, qui connaissent un très fort développement industriel, sont caractérisées pour leur application par trois principaux types de propriétés : leurs propriétés d'absorption, les propriétés mécaniques des gels qu'elles forment par absorption des fluides aqueux, et ce qu'on peut appeler les propriétés de transport de ces gels.

Les propriétés d'absorption, dont l'intérêt est immédiatement évident lorsqu'il s'agit de produits absorbants, et qui plus est superabsorbants, sont essentiellement les capacités intrinsèques d'absorption et de rétention, par exemple d'eau saline, et le temps de prise en gel.

Les propriétés mécaniques des gels aqueux de superabsorbants sont en relation avec la nécessité pour les articles d'hygiène de pouvoir absorber des fluides aqueux lorsqu'ils sont en situation de compression ou simplement quand ils contiennent une grande quantité de poudre superabsorbante. On s'est ici particulièrement intéressé à des systèmes à concentration élevée de poudre superabsorbante et présentant une importante capacité de succion capillaire sous pression.

Les propriétés de transport du gel de superabsorbant sont en rapport avec la capacité pour les fluides de diffuser rapidement dans le superabsorbant et de ne pas se trouver bloqués par le gel qui se forme au premier contact (gel blocking). Ces phénomènes de blocage se traduisent par des fuites des liquides qui ne parviennent pas à franchir une barrière de gel. On en estime l'importance par mesure de porosité dans certaines conditions de pression et d'imprégnation du superabsorbant par le fluide aqueux. Cette porosité est évidemment dépendante de la géométrie (granulométrie) de la poudre, mais aussi des propriétés mécaniques du gel, dont on comprend que l'écrasement peut avoir le colmatage comme conséquence fâcheuse. C'est la raison pour laquelle on prend souvent l'un pour l'autre, pour l'appréciation des propriétés de transport du gel, la porosité et le module mécanique du gel de superabsorbant, ce dernier étant aussi en rapport avec la succion capillaire évoquée plus haut.

Pour l'appréciation de ces propriétés, on procède habituellement aux mesures qu'on rappelle ci-après.

La capacité d'absorption intrinsèque de la résine superabsorbante s'obtient par le test dit du "tea-bag" (mesure des capacités d'absorption et de rétention par la méthode du "tea-bag", EDANA, Association Européenne des Non-Tissés, mesure des capacités d'absorption et de rétention par la méthode du "tea-bag"), test par lequel on mesure la reprise d'eau en poids par rapport au poids d'une résine sèche enfermée dans un sachet de papier thermoscellable, après immersion d'une vingtaine de minutes dans une solution aqueuse à 0,9 % de chlorure de sodium et égouttage d'une dizaine de minutes ; le même sachet est ensuite centrifugé pendant trois minutes à une vitesse spécifiée et pesé à nouveau, ce qui donne accès à la capacité de rétention d'eau saline.

La capacité de succion capillaire sous pression (SC) est la mesure de la capacité d'un lit de 1,5 g de produit superabsorbant d'absorber une eau salée à 0,9 g par litre sous une charge, ici choisie de 5 kPa. Il s'agit d'une propriété bien connue, désignée sous les termes d'absorption ou de succion capillaire sous pression ou sous charge (on rencontre fréquemment le terme anglo-saxon "absorption under load", abrégé par AUL). Le mode opératoire en est universellement pratiqué. On en trouvera une description, par exemple dans la demande de brevet EP-A1-0258120.

Pour effectuer la mesure de la porosité d'un lit de gel, on gonfle 4 g de résine superabsorbante avec 140 g d'une solution aqueuse de chlorure de sodium à 0,9 % en poids. Le gel formé est mis dans un conteneur de 52 mm de diamètre et 55 mm de hauteur. Le conteneur est ensuite branché sur la ligne d'un réservoir contenant la solution saline (NaCI 0,9 %), et la quantité de solution qui arrive à traverser le gel est pesée en continu. La pression du liquide traversant le lit (2,5 kPa) est maintenue constante par contrôle du niveau du réservoir d'alimentation. La masse de solution collectée après 10 minutes est considérée comme une mesure de la porosité du gel.

Le temps de prise en gel se mesure comme suit. Dans un bêcher de 250 ml et 60 mm de diamètre externe, on verse 3 g de poudre superabsorbante. On place à l'intérieur du bêcher un agitateur magnétique de dimensions 45X8 mm et le tout est placé sur une plaque d'agitation magnétique. L'agitation est réglée à 600 tours par minute juste avant de verser à l'intérieur du bêcher 100 ml d'une solution d'eau salée à 0,9% et de déclencher simultanément un chronomètre. Celui-ci est arrêté au moment où le vortex d'agitation disparaît. Le temps en secondes, indiqué par le chronomètre correspond au temps de prise en gel du produit.

Le problème qui se pose à l'homme du métier est que absorption et propriétés mécaniques sont des grandeurs antagonistes, et que toute tentative pour relever par synthèse le niveau de capacité intrinsèque d'absorption de polymères superabsorbants se solde par une chute des propriétés mécaniques, en particulier de la succion capillaire. La réalisation d'une poudre superabsorbante présentant à la fois
- une forte capacité intrinsèque d'absorption,
- une forte rétention,
- une forte succion capillaire,
- une grande porosité et
- un court temps de prise en gel,
apparaît comme un impossible compromis, qu'il n'y a d'espoir d'atteindre ni par synthèse directe, ni par formulation puisqu'il faut bien s'attendre à ce qu'un mélange de poudres à propriétés différentes ne corresponde qu'à un produit à propriétés intermédiaires médiocres.

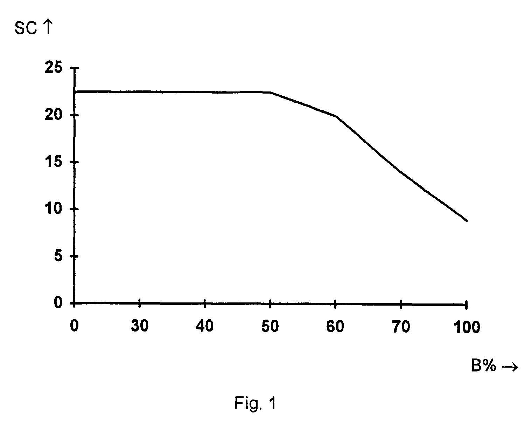

Or on vient de trouver ceci, qui est fort inattendu et dont on exploite les conséquences dans la présente invention : certains mélanges de deux poudres superabsorbantes de succions capillaires très différentes présentent une succion capillaire résultante voisine de la succion capillaire la plus élevée (voir figure 1). L'invention réside ainsi dans un procédé pour obtenir une poudre superabsorbante présentant à la fois une forte succion capillaire et une forte capacité intrinsèque d'absorption, qui consiste à mélanger dans des proportions raisonnables une poudre superabsorbante à forte capacité intrinsèque d'absorption mais faible succion capillaire, avec une poudre superabsorbante présentant au contraire une forte succion capillaire (fort module) et une capacité intrinsèque d'absorption plus faible.

Plus précisément, pour obtenir une poudre absorbante présentant le faisceau de caractéristiques suivantes,
- capacité intrinsèque d'absorption supérieure à 53 g/g,
- rétention comprise entre 25 et 35 g/g,
- succion capillaire (5kPa, 1,5 g de résine) supérieure à 20 g/g,
- porosité comprise entre 50 et 800 g,
- temps de prise en gel compris entre 100 et 200 secondes,
on mélange dans des proportions pondérales allant de 25:75 à 60:40, une poudre superabsorbante à forte succion capillaire dont les caractéristiques sont comprises dans les limites suivantes :
- capacité intrinsèque d'absorption inférieure à 55 g/g,
- rétention comprise entre 21 et 29 g/g,
- succion capillaire (5kPa, 1,5 g de résine) supérieure à 21 g/g,
- porosité supérieure à 1.000,
- temps de prise en gel compris entre 120 et 230 secondes,
avec une poudre superabsorbante à forte capacité intrinsèque d'absorption dont les caractéristiques sont comprises dans les limites suivantes
- capacité intrinsèque d'absorption supérieure à 62 g/g,
- rétention comprise entre 32 et 36 g/g,
- succion capillaire (5kPa, 1,5 g de résine) comprise entre 8 et 12 g/g,
- porosité comprise inférieure à 20 g,
- temps de prise en gel compris entre 90 et 120 secondes.

Plus particulièrement, les poudres selon l'invention sont constituées de billes de polymères résultant de la polymérisation en suspension inverse d'un monomère hydrophile éthyléniquement insaturé, en pratique un acide acrylique partiellement salifié, partiellement réticulé de granulométrie comprise entre 0,1 et 1 mm. Il peut être très avantageux d'utiliser comme poudre à forte succion capillaire une poudre superabsorbante à structure coeur-coquille résultant d'une polymérisation en suspension inverse suivie d'une post réticulation dans des conditions de teneur en eau par rapport au polymère anhydre au moment de la post-réticulation comprises entre 0,3 et 0,50, ainsi qu'une quantité minimale de post-réticulant de 500 ppm par rapport au polymère anhydride, comme celle dont le mode d'obtention a été décrit dans la demande française n° 96 01502, dont les caractéristiques sont comprises dans les limites suivantes :
- capacité intrinsèque d'absorption comprise entre 50 et 57 g/g,
- rétention comprise entre 22 et 27 g/g,
- succion capillaire (5kPa, 1,5 g de résine) d'au moins 20 g/g,
- porosité d'au moins 1.000 g,
- temps de prise en gel compris entre 130 et 230 secondes.

L'exemple suivant fera mieux saisir l'invention.

On mélange en diverses proportions deux poudres superabsorbantes. L'une, la poudre A, est une poudre superabsorbante polyacrylique à structure coeur-coquille, avec une succion capillaire élevée, mais une capacité intrinsèque d'absorption plutôt basse ; l'autre, la poudre B, est une poudre superabsorbante polyacrylique classique à bonne capacité intrinsèque d'absorption, mais relativement faible succion capillaire.

La poudre A a été réalisée conformément à l'enseignement de la demande de brevet n° 96 01502 de la façon suivante. Dans un réacteur agité, muni d'une double enveloppe où circule un fluide caloporteur à température consignée, on introduit une solution d'un tensioactif de faible HLB (<6) dans de l'heptane. La solution est chauffée (80°C) et une solution aqueuse de monomères acryliques (39% en poids), à savoir de l'acide acrylique neutralisé à 75% molaire par de la soude, préparée préalablement et contenant, en plus, du persulfate de potassium comme amorceur de polymérisation, de la carboxyméthylcellulose comme épaississant, et de l'éthylèneglycol-diglycidyléther comme agent de réticulation, est alors ajoutée de façon à obtenir, à l'aide de l'agitation, une dispersion (que l'on dit suspension inverse). On laisse polymériser le système en le maintenant à la température de consigne à 70°C. La polymérisation de cette première charge étant pratiquement arrivée à son terme, on introduit goutte à goutte (afin d'éviter une chute importante de la température du réacteur) une deuxième solution (39% en poids) d'acide acrylique neutralisé à 75% par de la soude, contenant, en plus des ingrédients cités pour la première charge, un tensioactif hydrophile agglomérant de fort HLB (> 15), comme ceux cités dans la demande de brevet français n° 95 04325, dont le nonylphénol éthoxylé à 50 moles d'oxyde d'éthylène est un exemple; on augmente aussi progressivement l'agitation. Il se produit en même temps que la polymérisation de la deuxième charge, une agglomération des particules de polymère. Lorsque la deuxième polymérisation est parvenue à son terme, on élimine une partie de l'eau du système en montant la température à celle de l'ébullition de l'azéotrope eau/heptane. On tire l'eau du système jusqu'à ce que le rapport pondéral de l'eau restante au polymère anhydre (RESA) soit égal à 0,4 et à ce moment, on introduit dans le système 900 ppm (par rapport au polymère total anhydre) d'éthylèneglycoldiglycidyléther comme agent de post-réticulation. On poursuit par une étape de séchage pendant laquelle on tire le restant d'eau et d'heptane. Le produit résultant est une poudre constituée d'agglomérats de particules sphériques dont 85% en poids se trouve dans la plage granulométrique 0,1 - 1 mm et dont moins de 1% traverse le tamis de 0,1 mm.

La poudre B a été réalisée conformément à l'enseignement de la demande de brevet EP-A-441507 (Sumitomo) de la façon suivante. Dans un réacteur agité, muni d'une double enveloppe où circule un fluide caloporteur à température consignée, on introduit une solution d'un tensioactif de faible HLB (< 6) dans de l'heptane. La solution est mise en équilibre thermique à 55 - 60°C et une solution aqueuse de monomères acryliques (39% en poids), à savoir de l'acide acrylique neutralisé à 75% par de la soude, préparée préalablement et contenant, en plus, du persulfate de potassium comme amorceur de polymérisation, de la carboxyméthylcellulose comme épaississant, et de l'éthylèneglycol-diglycidyléther comme agent de réticulation, est alors ajoutée de façon à obtenir, par agitation, une suspension inverse. La température de cette suspension est ajustée à 35-40°C. On provoque la polymérisation en remontant la température du fluide caloporteur à une valeur de consigne de 70°C. La polymérisation de cette première charge étant pratiquement arrivée à son terme, on abaisse la température à 20°C tout en augmentant fortement la vitesse d'agitation. On introduit alors goutte à goutte une deuxième solution (39% en poids) d'acide acrylique neutralisé à 75% molaire par de la soude, contenant, en plus des monomères, du persulfate de potassium comme amorceur de polymérisation et de l'éthylèneglycol-diglycidyléther comme agent de réticulation (noter ici l'absence intentionnelle d'épaississant), ce qui provoque le gonflement et l'agglomération des particules de polymères en suspension. Le système est alors réchauffé en portant la température de consigne à 70°C, ce qui provoque la polymérisation de la seconde charge de monomères. Lorsque la deuxième polymérisation est parvenue à son terme, on élimine une partie de l'eau du système en le portant à la température d'ébullition de l'azéotrope eau/heptane. On tire l'eau du système jusqu'à ce que le rapport pondéral de l'eau restante au polymère anhydre (RESA) soit égal à 0,2, et à ce moment, on introduit dans le système 250 ppm (par rapport au polymère total anhydre) d'éthylèneglycoldiglycidyléther à titre d'agent de post-réticulation. On poursuit par une étape de séchage pendant laquelle on tire le restant d'eau et l'heptane. Le produit résultant est une poudre constituée d'agglomérats de particules sphériques dont 85% en poids se trouve dans la plage granulométrique 0,1 - 1 mm et dont moins de 1% traverse le tamis de 0,1 mm.

Le tableau ci-dessous rassemble les propriétés des composants et de leurs mélanges en proportions variables.

| Mélange B/A | Absorption | Rétention | SC (5kPa) | Porosité | Temps de prise en gel |
|---|---|---|---|---|---|
| 0/100 | 51 | 24 | 22,5 | 1000 | 200 |
| 25/75 | 55 | 26 | 22,5 | | 170 |
| 30/70 | 55 | 27 | 22,5 | | 160 |
| 40/50 | 55 | 28 | 22,5 | | 150 |
| 50/50 | 60 | 29 | 22,5 | 100 | 140 |
| 60/40 | 61 | 29,5 | 20 | | 130 |
| 70/30 | 61 | 30 | 14 | | 120 |
| 100/0 | 66 | 34 | 9 | 1 | 109 |

On constate que par mélange de ces deux poudres dans les rapports 25:75 - 60:40 de l'invention, on réalise sans aucune difficulté un superabsorbant qui se caractérise par le faisceau de propriétés fort intéressant, et inaccessible par accès direct :
- forte capacité intrinsèque d'absorption (>55),
- rétention comprise entre 25 et 35 g/g,
- forte succion capillaire sous 5kPa (>20),
- porosité comprise entre 50 et 800 g
- temps de prise en gel < 170 secondes.

Si on porte son attention sur l'évolution de la succion capillaire en fonction de la proportion du composant B à moindre caractéristique de succion capillaire, on obtient la courbe représentée en figure 1, très caractéristique, avec un palier de succion capillaire pour des mélanges titrant jusqu'à 50% du composant B.

Les poudres superabsorbantes selon l'invention sont utilisables dans tous les domaines ouverts aux poudres de l'art antérieur, et en particulier aux articles d'hygiène. Elles sont particulièrement appréciées pour la réalisation de couches ultra-minces incorporant de fortes proportions de produit superabsorbant.

## Revendications

1. Procédé pour réaliser une poudre absorbante présentant le faisceau de caractéristiques suivantes,
- capacité intrinsèque d'absorption supérieure à 53 g/g,
- rétention comprise entre 25 et 35 g/g,
- succion capillaire (5kPa, 1,5 g de résine) supérieure à 20 g/g,
- porosité comprise entre 50 et 800 g,
- temps de prise en gel compris entre 100 et 200 secondes,
consistant à mélanger dans des proportions pondérales allant de 25:75 à 60:40, une poudre superabsorbante à forte succion capillaire dont les caractéristiques sont comprises dans les limites suivantes :
- capacité intrinsèque d'absorption inférieure à 55 g/g,
- rétention comprise entre 21 et 29 g/g,
- succion capillaire (5kPa, 1,5 g de résine) supérieure à 21 g/g,
- porosité supérieure à 1.000 g,
- temps de prise en gel compris entre 120 et 230 secondes,
avec une poudre superabsorbante à forte capacité intrinsèque d'absorption dont les caractéristiques sont comprises dans les limites suivantes :
- capacité intrinsèque d'absorption supérieure à 62 g/g,
- rétention comprise entre 32 et 36 g/g,
- succion capillaire (5kPa, 1,5 g de résine) comprise entre 8 et 12 g/g,
- porosité comprise inférieure à 20 g,
- temps de prise en gel compris entre 90 et 120 secondes.

2. Procédé selon la revendication 1, **caractérisé en ce que** la poudre superabsorbante à forte succion capillaire et la poudre supèrabsorbante à forte capacité intrinsèque d'absorption sont constituées de billes de polymères résultant de la polymérisation en suspension inverse d'un monomère hydrophile éthyléniquement insaturé, en pratique un acide acrylique partiellement salifié, partiellement réticulé de granulométrie comprise entre 0,1 et 1 mm.

3. Procédé selon les revendications 1 et 2, **caractérisé en ce que** la poudre à forte succion capillaire est une poudre de polymère d'acide acrylique résultant d'une polymérisation en suspension inverse suivie d'une post réticulation dans des conditions de teneur en eau par rapport au polymère anhydre au moment de la post-réticulation comprises entre 0,3 et 0,50, ainsi qu'une quantité minimale totale d'agent de réticulation de 500 ppm par rapport au polymère anhydride.

4. Application de la poudre de polymère superabsorbant selon les revendications 1 à 3 à la réalisation d'articles d'hygiène.

## Patentansprüche

1. Verfahren zur Herstellung eines absorbierenden Pulvers, das die folgenden Eigenschaften aufweist:
- intrinsische Aufnahmekapazität über 53 g/g,
- Retention im Bereich von 25 bis 35 g/g,
- Kapillarwirkung (5 kPa, 1,5 g Harz) über 20 g/g,
- Porosität im Bereich von 50 bis 800 g,
- Gelationszeit im Bereich von 100 bis 200 Sekunden,
das darin besteht, in einem Gewichtsverhältnis von 25:75 bis 60:40 ein superabsorbierendes Pulver mit großer Kapillarwirkung, dessen Eigenschaften in den folgenden Bereichen liegen:
- intrinsische Aufnahmekapazität unter 55 g/g,
- Retention im Bereich von 21 bis 29 g/g,
- Kapillarwirkung (5 kPa, 1,5 g Harz) über 21 g/g,
- Porosität über 1000 g,
- Gelationszeit im Bereich von 120 bis 230 Sekunden,
mit einem superabsorbierenden Pulver mit hoher intrinsischer Aufnahmekapazität zu vermischen, dessen Eigenschaften in den folgenden Bereichen liegen:
- intrinsische Aufnahmekapazität über 62 g/g,
- Retention im Bereich von 32 bis 36 g/g,
- Kapillarwirkung (5 kPa, 1,5 g Harz) im Bereich von 8 bis 12 g/g,
- Porosität unter 20 g,
- Gelationszeit im Bereich von 90 bis 120 Sekunden.

2. Verfahren nach Anspruch 1, **dadurch gekennzeichnet, daß** das superabsorbierende Pulver mit großer Kapillarwirkung und das superabsorbierende Pulver mit hoher intrinsischer Aufnahmekapazität aus Polymerkugeln mit einer Korngröße im Bereich von 0,1 bis 1 mm bestehen, die bei der inversen Suspensionspolymerisation eines ethylenisch ungesättigten hydrophilen Monomers, in der Praxis teilweise als Salz vorliegende, zum Teil vernetzte Acrylsäure, entstehen.

3. Verfahren nach den Ansprüchen 1 und 2, **dadurch gekennzeichnet, daß** das Pulver mit großer Kapillarwirkung ein Acrylsäurepolymerpulver ist, das bei der inversen Suspensionspolymerisation und anschließender nachträglicher Vernetzung gebildet wird, die unter solchen Bedingungen durchgeführt wird, daß bei der nachträglichen Vernetzung der Wassergehalt, bezogen auf das wasserfreie Polymer, im Bereich von 0,3 bis 0,50 liegt, wobei die minimale Gesamtmenge des Vernetzungsmittels, bezogen auf das wasserfreie Polymer, 500 ppm beträgt.

4. Verwendung des superabsorbierenden Polymerpulvers nach den Ansprüchen 1 bis 3 zur Herstellung von Hygieneartikeln.

## Claims

1. Process for producing an absorbent powder exhibiting the set of following characteristics,
- intrinsic absorption capacity of greater than 53 g/g,
- retention of between 25 and 35 g/g,
- capillary suction (5 kPa, 1.5 g of resin) of greater than 20 g/g,
- porosity of between 50 and 800 g,
- gel setting time of between 100 and 200 seconds,
which consists in mixing, in proportions by weight ranging from 25:75 to 60:40, a superabsorbent powder of high capillary suction, the characteristics of which are within the following limits:
- intrinsic absorption capacity of less than 55 g/g,
- retention of between 21 and 29 g/g,
- capillary suction (5 kPa, 1.5 g of resin) of greater than 21 g/g,
- porosity of greater than 1000 g,
- gel setting time of between 120 and 230 seconds,
with a superabsorbent powder of high intrinsic absorption capacity, the characteristics of which are within the following limits:
- intrinsic absorption capacity of greater than 62 g/g,
- retention of between 32 and 36 g/g,
- capillary suction (5 kPa, 1.5 g of resin) of between 8 and 12 g/g,
- porosity of less than 20 g,
- gel setting time of between 90 and 120 seconds.

2. Process according to Claim1 **characterized in that** the superabsorbent powder of high capillary suction and the superabsorbent powder of high intrinsic absorption capacity are composed of beads of polymers, resulting from the inverse suspension polymerization of an ethylenically unsaturated hydrophilic monomer, in practice a partially salified and partially crosslinked acrylic acid, with a particle size of between 0.1 and 1 mm.

3. Process according to Claims 1 and 2, **characterized in that** the powder of high capillary suction is an acrylic acid polymer powder resulting from an inverse suspension polymerization, followed by postcrosslinking under conditions of water content with respect to the anhydrous polymer at the time of the postcrosslinking of between 0.3 and 0.50, as well as a minimum total amount of crosslinking agent of 500 ppm with respect to the anhydride polymer.

4. Application of the superabsorbent polymer powder according to Claims 1 to 3 in the production of articles of hygiene
